# EUROPEAN PATENT APPLICATION

(11) **EP 4 749 717 A1**
(43) Date of publication of application: **27.05.2026**
(21) Application number: 25215547.8
(22) Date of filing: 13.11.2025
(51) Int. Cl.: H01M 4/525, H01M 4/131, H01M 10/0525

(54) **POSITIVE ELECTRODE ACTIVE MATERIAL, ELECTRODE, AND LITHIUM ION SECONDARY BATTERY**

(30) Priority: 25.11.2024 JP 2024204525
(71) Applicant: Toyota Jidosha Kabushiki Kaisha, Toyota-shi, Aichi-ken 471-8571 (JP)
(72) Inventor: PROCTER, Momoko, Aichi-ken, 471-8571 (JP); OHSAWA, Ryosuke, Aichi-ken, 471-8571 (JP); MAHARA, Yuji, Aichi-ken, 471-8571 (JP); KINOSHITA, Taku, Aichi-ken, 471-8571 (JP)
(74) Representative: Kuhnen & Wacker Patent- und Rechtsanwaltsbüro PartG mbB

(57) **Abstract**

A positive electrode active material includes powder including single crystal particles (1). Each of the single crystal particles (1) includes a lithium transition metal composite oxide. The lithium transition metal composite oxide has a crystal structure that belongs to R-3m space group and includes at least nickel. In a scanning electron microscope image of the powder, the single crystal particles (1) do not aggregate and are independent single particles. Each of the single crystal particles (1) has a polyhedral shape. Each of the single crystal particles (1) has a longest side (1a) and a short side (1b). The longest side (1a) extends along a 003 plane. The short side (1b) is connected to an end of the longest side (1a). An interior angle formed between the longest side (1a) and the short side (1b) ranges from 60° to 120°. A ratio of the longest side (1a) to the short side (1b) is greater than or equal to 1.10.

## Description

### BACKGROUND OF THE INVENTION

### 1. Field of the Invention

The disclosure relates to a positive electrode active material, an electrode, and a lithium ion secondary battery.

### 2. Description of Related Art

Japanese Unexamined Patent Application Publication No. 2022-064294 (JP 2022-064294 A) describes the synthesis of single particles by using the flux method.

### SUMMARY OF THE INVENTION

A single crystal-type positive electrode active material has been suggested. The positive electrode active material can include a lithium transition metal composite oxide. The lithium transition metal composite oxide can have a crystal structure (layered structure) that belongs to R-3m. The layered structure is formed by alternately laminating 3a sites (Li layers) and 3b sites (transition metal layers). Since the 3b sites contain nickel (Ni) ions, for example, an increase in discharge capacity is expected.

During charging, Li ions are extracted from the Li layers. Due to the extraction of Li ions, the Li layers can shrink in the lamination direction (c-axis direction). During the shrinkage of the Li layers, an exchange phenomenon can occur between Li ions in the Li layers and Ni ions in the transition metal layers. This phenomenon is also called "cation mixing". Due to the occurrence of cation mixing, part of the layered structure can change into a rock salt structure. The discharge capacity can reduce as a result of an irreversible structural change. In the single crystal-type positive electrode active material, the influence of structural changes is considered to be significant. Repeated charge-discharge cycles are considered to accelerate capacity degradation caused by structural changes.

The disclosure provides improvements in cycle characteristics.

Hereinafter, the technical configuration and functional effects of the disclosure will be described. However, the working mechanism includes assumptions. The working mechanism does not limit the technical scope of the disclosure.

A first aspect of the disclosure provides a positive electrode active material that includes powder. The powder includes single crystal particles. Each of the single crystal particles includes a lithium transition metal composite oxide. The lithium transition metal composite oxide has a crystal structure that belongs to R-3m space group. The lithium transition metal composite oxide includes at least nickel. In a scanning electron microscope image of the powder, the single crystal particles do not aggregate and are independent single particles. Each of the single crystal particles has a polyhedral shape. Each of the single crystal particles has a longest side and a short side. The longest side extends along a 003 plane. The short side is connected to an end of the longest side. An interior angle formed between the longest side and the short side ranges from 60° to 120°. A ratio of the longest side to the short side is greater than or equal to 1.10.

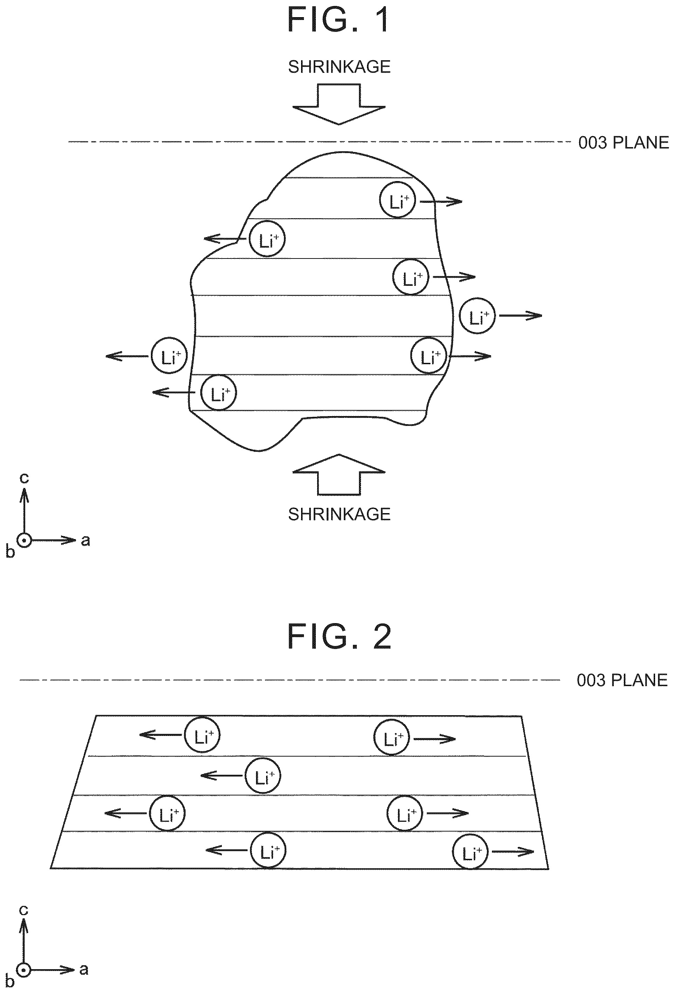

Hereinafter, the ratio "a/b" of the longest side "a" to the short side "b" is also referred to as "aspect ratio". FIG. 1 is a first conceptual diagram that shows the relationship between particle shape and crystal structure. A single crystal particle has a shape with a small aspect ratio. In other words, the aspect ratio is less than 1.10. 3a sites (Li layers) expand along the 003 plane. During charging, Li ions are extracted from the Li layers. In a shape with a small aspect ratio, the expansion of the Li layers in the direction along the 003 plane is small. Therefore, it is considered that desorption of Li ions from the Li layers can rapidly progress. It is believed that Li layers steeply shrink due to the depletion of Li ions in the Li layers. It is thought that the steep shrinkage of the Li layers is a trigger of cation mixing.

FIG. 2 is a second conceptual diagram that shows the relationship between particle shape and crystal structure. Each of the single crystal particles in the disclosure has a polyhedral shape with a large aspect ratio. Furthermore, the longest side extends along the 003 plane. Therefore, the Li layers are considered to expand wider than those in FIG. 1. Since the Li layers are wide in the direction along the 003 plane, it is considered that desorption of Li ions from the Li layers can relatively slowly progress. It is believed that the Li ions remaining in the Li layers function as a so-called pillar to alleviate the shrinkage of the Li layers. Therefore, cation mixing is reduced, so improvements in cycle characteristics are expected.

In the first aspect, the ratio of the longest side to the short side may be greater than or equal to 2.00 and less than or equal to 6.10.

When the aspect ratio is greater than or equal to 2.00 and less than or equal to 6.10, improvements in cycle characteristics are expected.

In the first aspect, the interior angle may be greater than or equal to 82° and less than or equal to 94°.

When the interior angle is greater than or equal to 82° and less than or equal to 94°, improvements in cycle characteristics are expected.

In the first aspect, an angularity of the single crystal particles may range from 451 to 584.

When the angularity ranges from 451 to 584, improvements in cycle characteristics are expected.

In the first aspect, in the powder, a proportion of the single crystal particles with the interior angle ranging from 60° to 120° may be higher than or equal to 21%.

The powder may include single crystal particles having other shapes as long as the powder includes single crystal particles having the shape of the first aspect. When the proportion of single crystal particles having the shape of the first aspect in the powder is higher than or equal to 21%, improvements in cycle characteristics are expected.

In the first aspect, the longest side may range from 1.59 µm to 3.48 µm. The short side may range from 0.377 µm to 1.45 µm.

When the longest side ranges from 1.59 µm to 3.48 µm and the short side ranges from 0.377 µm to 1.45 µm, improvements in cycle characteristics are expected.

In the first aspect, each of the single crystal particles may have a composition represented by a general formula: LiₓNiₐCo_{b}Mn_{c}O_{y}. In the general formula, x, a, b, c, and y may satisfy relationships 0.1 ≤ x ≤ 1.5, 0.5 ≤ a ≤ 1.0, 0 ≤ b ≤ 0.3, 0 ≤ c ≤ 0.3, a + b + c = 1.0, and 1.5 ≤ y ≤ 2.1.

In the first aspect, 3b sites (transition metal layers) may further include other elements in addition to Ni. The 3b sites may further include, for example, Co and Mn. Since the Ni composition ratio "a" is greater than or equal to 0.5, for example, an increase in initial discharge capacity is expected.

A second aspect of the disclosure provides an electrode. The electrode includes a positive electrode layer. The positive electrode layer includes the positive electrode active material of the first aspect.

The positive electrode layer can also be referred to as a "positive electrode active material layer", a "positive electrode mixture layer", or the like. The "electrode" may be a "monopolar electrode (positive electrode)" or may be a "bipolar electrode" as long as the "electrode" includes a positive electrode layer.

A third aspect of the disclosure provides a lithium ion secondary battery. The lithium ion secondary battery includes the electrode of the second aspect. Hereinafter, the lithium ion secondary battery can be abbreviated as "battery".

In the third aspect, the lithium ion secondary battery may have a bipolar structure.

The bipolar structure can be formed stacking bipolar electrodes. With the bipolar structure, for example, improvements in output characteristics are expected.

Hereinafter, one embodiment (hereinafter, which can be abbreviated as "present embodiment") of the disclosure and one example (hereinafter, which can be abbreviated as "present example") of the disclosure will be described. However, the present embodiment and the present example do not limit the technical scope of the disclosure. The present embodiment and the present example are illustrative in all respects. The present embodiment and the present example are not restrictive. The technical scope of the disclosure encompasses all modifications within the scope of the appended claims and equivalents thereof. For example, any components can be extracted from the present embodiment and any combinations of them are anticipated from the beginning.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a first conceptual diagram that shows the relationship between particle shape and crystal structure;
FIG. 2 is a second conceptual diagram that shows the relationship between particle shape and crystal structure;
FIG. 3 is a conceptual diagram of a single crystal particle in an embodiment;
FIG. 4 is a diagram that illustrates an HAADF-STEM analysis;
FIG. 5 is a diagram that illustrates a method of measuring an angularity;
FIG. 6 is a schematic perspective view of a lithium ion secondary battery in the present embodiment;
FIG. 7 is a schematic sectional view taken along the line VII-VII in FIG. 6;
FIG. 8 is a table that shows experimental results;
FIG. 9 is a first firing profile; and
FIG. 10 is a second firing profile.

### DETAILED DESCRIPTION OF EMBODIMENTS

### Terms and Phrases

The terms "include", "contain", "have", and their modifications are open-ended expressions. A structure expressed in an open-ended manner may further include additional elements or do not need to include additional elements, in addition to indispensable elements. The term "consist of" is a closed-ended expression. However, even a structure expressed in a closed-ended manner can include commonly associated impurities or additional elements irrelevant to a target technology. The term "essentially consist of ... " is a semi-closed-ended expression. A structure expressed in a semi-closed-ended expression is allowed to add elements that substantially do not affect basic and new characteristics of a target technology.

The expressions "may", "can", and the like, are used not in the sense of obligatory "the meaning of must" but in the sense of permission "the meaning of possibility".

Geometrical terms should not be interpreted in a strict sense. Examples of the geometrical terms include "parallel", "perpendicular", and "orthogonal". For example, the direction, angle, and distance may be relatively changed as long as substantially the same or similar function is obtained. Geometrical terms can include tolerances, errors, and the like, related to, for example, design, operation, and manufacturing. The dimensional relationships in each figure may not correspond to the actual dimensional relationships. The dimensional relationships in each figure may be changed to help readers' understanding. For example, length, width, or thickness may be changed. Part of a structure may be omitted.

Elements described in the "singular form" can also include those in the plural form unless otherwise specified. For example, a particle may mean a plurality of particles (particle group), an assembly of particles, and powder.

A numerical range, such as "m% to n%" includes both the upper limit and lower limit unless otherwise specified. In other words, "m% to n%" means the numerical range "higher than or equal to m% and lower than or equal to n%". The numerical range "higher than or equal to m% and lower than or equal to n%" includes the numerical range "higher than m% and lower than n%". The terms "greater than or equal to" and "less than or equal to" are respectively expressed by non-strict inequalities "≤" and "≥". The terms "greater than" and "less than" are respectively expressed by strict inequalities "<" and ">". Any numeric value selected from within a numerical range may be set as a new upper limit or lower limit. For example, a new numerical range may be set by using any combination of a numeric value within a numerical range and a numeric value described in other parts, tables, figures, and the like in the specification.

All numeric values are modified by the term "about". The term "about" can mean, for example, ±5%, ±3%, or ±1%. All numeric values are approximate values that can vary depending on the mode of use of a target technology. All numeric values can be represented by significant figures. Measured values can be average values from multiple measurements unless otherwise specified. The number of measurements may be three or more, may be five or more, or may be 10 or more. Generally, as the number of measurements increases, the reliability of the average value is expected to improve. Measured values can be rounded based on the number of significant figures. Measured values can include errors and the like due to, for example, the detection limits of measuring devices.

Devices, software, and the like used for measurements and the like of various values are only examples. Devices equivalent to illustrated devices and the like may be used. When equivalent devices are used, measurement conditions may be adjusted according to the devices.

A space group to which a crystal structure belongs is specified based on an X-ray diffraction (XRD) pattern. An XRD pattern can be acquired through powder XRD measurement. Measurement conditions are, for example, as follows.
Analysis method: wide-angle method
Measuring device: SmartLabII (produced by Rigaku Holdings Corporation)
Measurement Angle: 10° to 120°
Tube: CuKα
Tube voltage: 45 kV
Tube current: 200 mA
Measurement method: continuous method
Step: 0.02
Velocity: 2°/min
IS: 1/2
RS: 20 mm
Detection mode: One dimension

Various dimension measurements and shape analyses in scanning electron microscope (SEM) images, transmission electron microscope (TEM) images, and the like, can be performed using image analysis software "ImageJ" or the like.

"Single crystal particles" are single particles (primary particles) that apparently do not aggregate and are independent in SEM images. Single crystal particles each apparently have no grain boundary in SEM images. The magnification of the SEM images may, for example, range from 10,000 times to 30,000 times. SEM images may also be SEM cross-sectional images of powder.

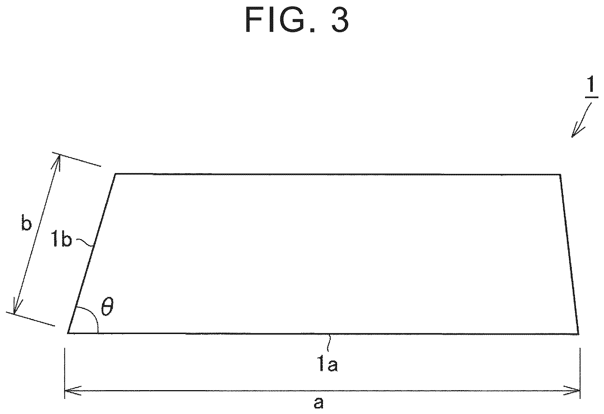

FIG. 3 is a conceptual diagram of a single crystal particle in the present embodiment. A "longest side 1a" apparently represents the longest side in an SEM image of a single crystal particle 1. A "short side 1b" is connected to an end of the longest side 1a. The short side 1b apparently represents the longest side among the sides connected to the longest side 1a in the SEM image. The short side 1b extends from the end of the longest side 1a in a direction that intersects a direction in which the longest side 1a extends. The longest side 1a and the short side 1b may, for example, extend linearly. The longest side 1a and the short side 1b may be, for example, curved. When a side is curved, the length of the side represents a distance between both ends of the side.

In the SEM image, single crystal particles 1 of which the interior angle "θ" formed between the longest side 1a and the short side 1b satisfies the relationship "60° ≤ θ ≤ 120°" are extracted. Ten single crystal particles 1 are randomly extracted from among the extracted single crystal particles 1. For each of the ten single crystal particles 1, the longest side "a", the short side "b", and the interior angle "θ" are measured. The average values of 10 single crystal particles 1 are respectively adopted for the longest side "a", the short side "b", and the interior angle "θ".

In the SEM image, the interior angle "θ" formed between the longest side "a" and the short side "b" is measured for randomly extracted 100 single crystal particles 1. The number of single crystal particles 1 that satisfy the relationship "60° ≤ θ ≤ 120°" is counted to calculate the proportion of the single crystal particles 1 that satisfy the relationship "60° ≤ θ ≤ 120°".

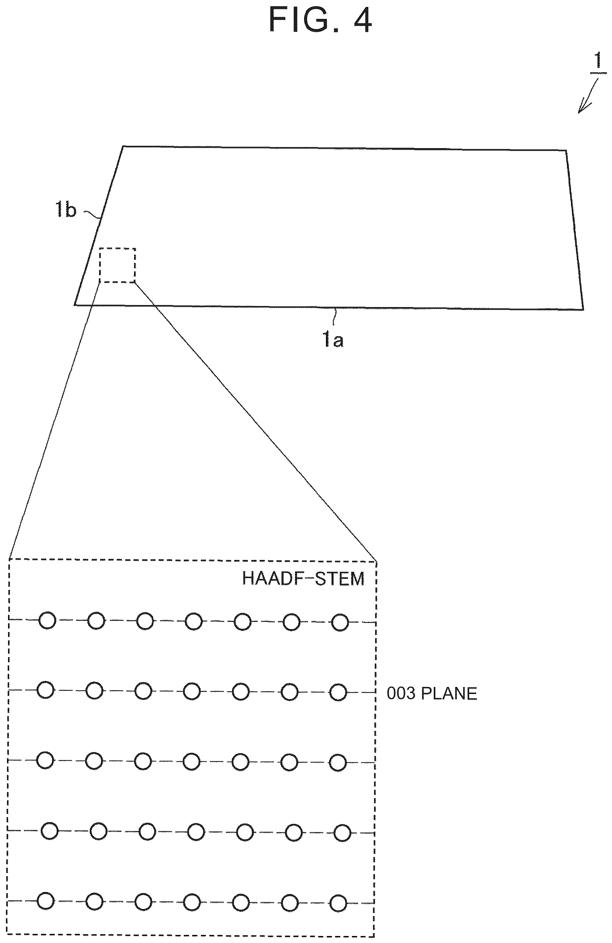

A "003 plane" can be identified in a high-angle annular dark field scanning transmission electron microscope (HAADF-STEM) image. For example, powder is embedded in epoxy resin. A sample is prepared by slicing the powder along with the resin using, for example, argon ion milling. FIG. 4 is a diagram that illustrates an HAADF-STEM analysis. Initially, a single crystal particle 1 is extracted at low magnification. The longest side 1a of the single crystal particle 1 is identified. Subsequently, the 003 plane is identified by observing the single crystal particle 1 at high magnification. When the angle formed between the 003 plane and the longest side 1a ranges from 0° to 30°, the longest side 1a is assumed to extend along the 003 plane. In the STEM image, when the longest side 1a extends along the 003 plane in one or more single crystal particles 1 among randomly extracted 10 single crystal particles 1, the longest side 1a is assumed to extend along the 003 plane in the entire powder.

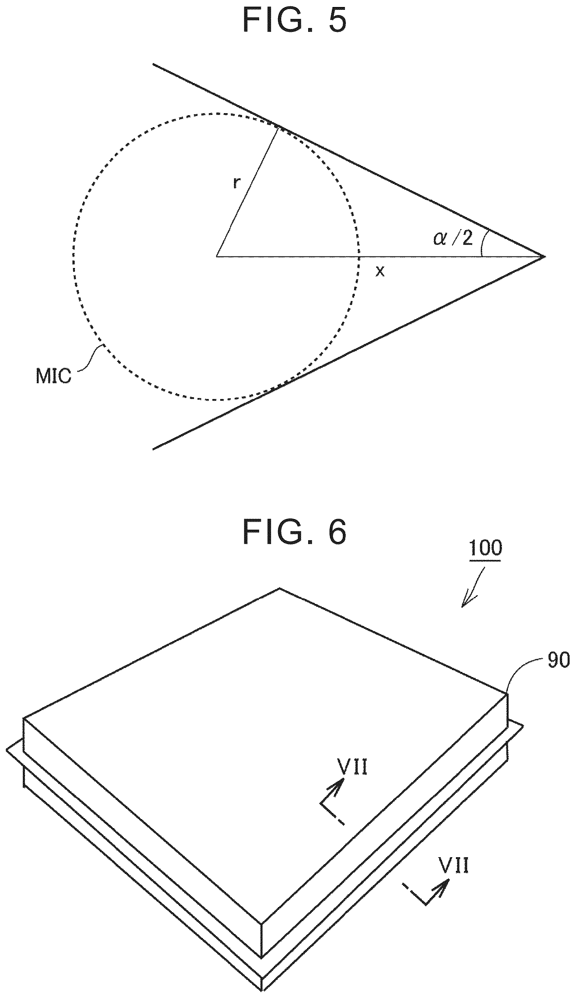

An "angularity" represents the Lees's angularity "Aₜₒₜₐₗ". The Lees's angularity "Aₜₒₜₐₗ" is measured by using the method described in "Lees, G.: A New Method for Determining the Angularity of Particles, Sedimentology, 3, 2-21, 1964". FIG. 5 is a diagram that illustrates a method of measuring the angularity. At one corner in a two-dimensional projection image of powder, the angle "α" of the corner, the distance "x" between the tip of the corner and the center of the maximum inscribed circle (MIC), and the radius "r" of the MIC are measured. Using the calculation formula "Aᵢ = (180° - α)x/r", the angularity "Aᵢ" of the corner is calculated. The total of Aᵢs of all the corners is the angularity "Aₜₒₜₐₗ". The average value among the 10 single crystal particles 1 is adopted as the angularity "Aₜₒₜₐₗ".

The "D50" represents the particle diameter at which the cumulative frequency is 50% in the volume-based particle size distribution (cumulative distribution). D50 can be measured by, for example, laser diffraction method. Similar to D50, the particle size at which the cumulative frequency is 10% is referred to as "D10", and the particle size at which the cumulative frequency is 90% is referred to as "D90".

The chemical composition of a chemical compound can be measured using inductively coupled plasma atomic emission spectroscopy (ICP-AES). A 0.1 g sample (for example, positive electrode active material) is dissolved in a mixed acid (10 ml) of hydrochloric acid and sulfuric acid to prepare a sample solution. The sample solution is diluted to an adequate concentration using volumetric flask. After the dilution, a composition analysis is performed using an ICP-AES device. For example, the product name "PS3520 UVDD II (manufactured by Hitachi High-Tech Analysis Corporation)" may be used.

A stoichiometric formula represents a typical example of the chemical compound. The chemical compound may have a non-stoichiometric composition. For example, "Al₂O₃" is not limited to chemical compounds having a molar ratio of "Al/O = 2/3". "Al₂O₃" represents chemical compounds that include Al and O at a selected molar ratio unless otherwise specified. For example, the chemical compound may be doped with trace elements. Some of Al and O may be substituted with other elements.

A "derivative" refers to a chemical compound modified from a parent chemical compound by at least one selected from the group consisting of introduction of functional groups, substitution of atoms, oxidation, reduction, and other chemical reactions. The number of modification sites may be one or may be multiple. A "substituent" may include at least one selected from the group consisting of, for example, alkyl group, alkenyl group, alkynyl group, cycloalkyl group, unsaturated cycloalkyl group, aromatic group, heterocyclic group, halogen atoms (such as F, Cl, Br, and I), OH group, SH group, CN group, SCN group, OCN group, nitro group, alkoxy group, unsaturated alkoxy group, amino group, alkylamino group, dialkylamino group, aryl oxy group, acyl group, alkoxycarbonyl group, acyl oxy group, aryl oxycarbonyl group, acylamino group, alkoxycarbonylamino group, aryl oxycarbonylamino group, sulfonylamino group, sulfamoyl group, carbamoyl group, alkylthio group, arylthio group, sulfonyl group, sulfinyl group, ureido group, phosphoramidate group, sulfo group, carboxyl group, hydroxamic acid group, sulfino group, hydrazino group, imino group, and silyl group. These substituents may be further substituted. When two or more substituents are included, the substituents may be the same or may be different. A plurality of substituents may be bonded to each other to form a ring.

### Positive Electrode Active Material

A positive electrode active material is intended for a battery. The details of the battery will be described later. The positive electrode active material includes powder (a cluster of particles). The D50 of the powder may be, for example, greater than or equal to 1 µm, greater than or equal to 3 µm, greater than or equal to 5 µm, greater than or equal to 10 µm, or greater than or equal to 15 µm. The D50 of the powder may be, for example, less than or equal to 30 µm, less than or equal to 20 µm, or less than or equal to 10 µm.

The powder includes single crystal particles. The single crystal particles are primary particles that do not aggregate and that are present alone. The powder may include polycrystalline particles as long as the powder includes single crystal particles. The polycrystalline particles are aggregates of primary particles. The number of primary particles that constitute a polycrystalline particle may be, for example, greater than or equal to two, greater than or equal to five, or greater than or equal to 10. The number of primary particles that constitute a polycrystalline particle may be, for example, less than or equal to 100, less than or equal to 50, less than or equal to 20, or less than or equal to 10. A polycrystalline particle can have substantially the same composition and crystal structure as a single crystal particle. In the powder, the proportion of single crystal particles to the total of single crystal particles and polycrystalline particles may be, for example, higher than or equal to 1%, higher than or equal to 5%, higher than or equal to 10%, higher than or equal to 20%, higher than or equal to 30%, higher than or equal to 40%, higher than or equal to 50%, higher than or equal to 60%, higher than or equal to 70%, higher than or equal to 80%, or higher than or equal to 90%. In the powder, the proportion of single crystal particles to the total of single crystal particles and polycrystalline particles may be, for example, lower than or equal to 100%, lower than or equal to 90%, lower than or equal to 80%, lower than or equal to 70%, lower than or equal to 60%, lower than or equal to 50%, lower than or equal to 40%, lower than or equal to 30%, lower than or equal to 20%, lower than or equal to 10%, or lower than or equal to 5%.

The positive electrode active material may be a monodisperse system. When the powder includes single crystal particles and is a monodisperse system, for example, improvements in cycle characteristics are expected. The powder may, for example, have a span of less than or equal to one. The "span" represents a value obtained by the calculation formula "(D90 - D10)/D50". As the span reduces, the particle size distribution is considered to be sharper. The span of the powder may be, for example, less than or equal to 0.9, less than or equal to 0.8, less than or equal to 0.7, less than or equal to 0.6, or less than or equal to 0.5. The span of the powder may be, for example, greater than or equal to 0.1, greater than or equal to 0.2, greater than or equal to 0.3, greater than or 0.4, or greater than or equal to 0.5.

The outer shape of each single crystal particle 1 is a polyhedral shape. The outer shape of each single crystal particle 1 may be, for example, a hexahedral shape or an octahedral shape. The outer shape of each single crystal particle 1 may be, for example, a rectangular parallelepiped shape.

Each of the single crystal particles 1 has the longest side 1a and the short side 1b. The longest side 1a extends along the 003 plane. The angle formed between the longest side 1a and the 003 plane may be, for example, less than or equal to 25°, less than or equal to 15°, less than or equal to 10°, less than or equal to 5°, less than or equal to 3°, or less than or equal to 1°. The proportion of single crystal particles 1 with the longest side 1a aligned along the 003 plane among 10 single crystal particles 1 randomly extracted from the STEM image of the powder may be, for example, higher than or equal to 20%, higher than or equal to 30%, higher than or equal to 40%, higher than or equal to 50%, higher than or equal to 60%, higher than or equal to 70%, higher than or equal to 80%, or higher than or equal to 90%.

The aspect ratio "a/b" is greater than or equal to 1.10. The aspect ratio "a/b" may be, for example, greater than or equal to 1.20, greater than or equal to 1.40, greater than or equal to 1.60, greater than or equal to 1.80, greater than or equal to 2.00, greater than or equal to 2.20, greater than or equal to 2.40, greater than or equal to 2.60, greater than or equal to 2.80, greater than or equal to 3.00, greater than or equal to 3.20, greater than or equal to 3.40, greater than or equal to 3.60, greater than or equal to 3.80, greater than or equal to 4.00, greater than or equal to 4.20, greater than or equal to 4.40, greater than or equal to 4.60, greater than or equal to 4.80, greater than or equal to 5.00, greater than or equal to 5.20, greater than or equal to 5.40, greater than or equal to 5.60, greater than or equal to 5.80, greater than or equal to 6.00, greater than or equal to 6.10, greater than or equal to 6.20, greater than or equal to 6.40, greater than or equal to 6.60, greater than or equal to 6.80, or greater than or equal to 7.00. The aspect ratio "a/b" may be, for example, less than or equal to 10.0, less than or equal to 9.00, less than or equal to 8.00, less than or equal to 7.00, less than or equal to 6.80, less than or equal to 6.60, less than or equal to 6.40, less than or equal to 6.20, less than or equal to 6.10, less than or equal to 6.00, less than or equal to 5.80, less than or equal to 5.60, less than or equal to 5.40, less than or equal to 5.20, less than or equal to 5.00, less than or equal to 4.80, less than or equal to 4.60, less than or equal to 4.40, less than or equal to 4.20, less than or equal to 4.00, less than or equal to 3.80, less than or equal to 3.60, less than or equal to 3.40, less than or equal to 3.20, less than or equal to 3.00, less than or equal to 2.80, less than or equal to 2.60, less than or equal to 2.40, less than or equal to 2.20, less than or equal to 2.00, less than or equal to 1.80, less than or equal to 1.60, less than or equal to 1.40, or less than or equal to 1.20. The aspect ratio "a/b" may, for example, range from 2.00 to 6.10.

The longest side 1a may be, for example, greater than or equal to 1.40 µm, greater than or equal to 1.59 µm, greater than or equal to 1.80 µm, greater than or equal to 2.00 µm, greater than or equal to 2.20 µm, greater than or equal to 2.30 µm, greater than or equal to 2.40 µm, greater than or equal to 2.60 µm, greater than or equal to 2.73 µm, greater than or equal to 2.80 µm, greater than or equal to 3.00 µm, greater than or equal to 3.20 µm, greater than or equal to 3.40 µm, greater than or equal to 3.48 µm, greater than or equal to 3.60 µm, greater than or equal to 3.80 µm, or greater than or equal to 4.00 µm. The longest side 1a may be, for example, less than or equal to 6.00 µm, less than or equal to 5.00 µm less than or equal to 4.00 µm, less than or equal to 3.80 µm, less than or equal to 3.60 µm, less than or equal to 3.48 µm, less than or equal to 3.40 µm, less than or equal to 3.20 µm, less than or equal to 3.00 µm, less than or equal to 2.80 µm, less than or equal to 2.73 µm, less than or equal to 2.60 µm, less than or equal to 2.40 µm, less than or equal to 2.30 µm, less than or equal to 2.20 µm, less than or equal to 2.00 µm, less than or equal to 1.80 µm, or less than or equal to 1.59 µm. The longest side 1a may, for example, range from 1.59 µm to 3.48 µm.

The short side 1b may be, for example, greater than or equal to 0.200 µm, greater than or equal to 0.300 µm, greater than or equal to 0.380 µm, greater than or equal to 0.400 µm, greater than or equal to 0.500 µm, greater than or equal to 0.600 µm, greater than or equal to 0.700 µm, greater than or equal to 0.800 µm, greater than or equal to 0.830 µm, greater than or equal to 0.900 µm, greater than or equal to 0.980 µm, greater than or equal to 1.00 µm, greater than or equal to 1.10 µm, greater than or equal to 1.20 µm, greater than or equal to 1.30 µm, greater than or equal to 1.40 µm, greater than or equal to 1.45 µm, greater than or equal to 1.50 µm, greater than or equal to 1.60 µm, greater than or equal to 1.70 µm, greater than or equal to 1.80 µm, greater than or equal to 1.90 µm, or greater than or equal to 2.00 µm. The short side 1b may be, for example, less than or equal to 5.00 µm, less than or equal to 4.00 µm, less than or equal to 3.00 µm, less than or equal to 2.00 µm, less than or equal to 1.90 µm, less than or equal to 1.80 µm, less than or equal to 1.70 µm, less than or equal to 1.60 µm, less than or equal to 1.50 µm, less than or equal to 1.45 µm, less than or equal to 1.40 µm, less than or equal to 1.30 µm, less than or equal to 1.20 µm, less than or equal to 1.10 µm, less than or equal to 1.00 µm, less than or equal to 0.980 µm, less than or equal to 0.900 µm, less than or equal to 0.830 µm, less than or equal to 0.800 µm, less than or equal to 0.700 µm, less than or equal to 0.600 µm, less than or equal to 0.500 µm, less than or equal to 0.400 µm, or less than or equal to 0.380 µm. The short side 1b may, for example, range from 0.380 µm to 1.45 µm.

The interior angle "θ" formed between the longest side 1a and the short side 1b ranges from 60° to 120°. The interior angle "θ" may be, for example, greater than or equal to 62°, greater than or equal to 64°, greater than or equal to 66°, greater than or equal to 68°, greater than or equal to 70°, greater than or equal to 72°, greater than or equal to 74°, greater than or equal to 76°, greater than or equal to 78°, greater than or equal to 80°, greater than or equal to 82°, greater than or equal to 83°, greater than or equal to 84°, greater than or equal to 86°, greater than or equal to 87°, greater than or equal to 88°, greater than or equal to 90°, greater than or equal to 92°, greater than or equal to 94°, greater than or equal to 96°, greater than or equal to 98°, greater than or equal to 100°, greater than or equal to 102°, greater than or equal to 104°, greater than or equal to 106°, greater than or equal to 108°, greater than or equal to 110°, greater than or equal to 112°, greater than or equal to 114°, greater than or equal to 116°, or greater than or equal to 118°. The interior angle "θ" may be, for example, less than or equal to 118°, less than or equal to 116°, less than or equal to 114°, less than or equal to 112°, less than or equal to 110°, less than or equal to 108°, less than or equal to 106°, less than or equal to 104°, less than or equal to 102°, less than or equal to 100°, less than or equal to 98°, less than or equal to 96°, less than or equal to 94°, less than or equal to 92°, less than or equal to 90°, less than or equal to 88°, less than or equal to 87°, less than or equal to 86°, less than or equal to 84°, less than or equal to 83°, less than or equal to 82°, less than or equal to 80°, less than or equal to 78°, less than or equal to 76°, less than or equal to 74°, less than or equal to 72°, less than or equal to 70°, less than or equal to 68°, less than or equal to 66°, less than or equal to 64°, or less than or equal to 62°. The interior angle "θ" may, for example, range from 82° to 94°.

In the powder, the proportion of single crystal particles 1 that satisfy the relationship "60° ≤ θ ≤ 120°" may be, for example, higher than or equal to 21%. The proportion may be, for example, higher than or equal to 25%, higher than or equal to 30%, higher than or equal to 34%, higher than or equal to 35%, higher than or equal to 40%, higher than or equal to 45%, higher than or equal to 50%, higher than or equal to 55%, higher than or equal to 58%, higher than or equal to 60%, higher than or equal to 65%, or higher than or equal to 70%. The proportion may be, for example, lower than or equal to 100%, lower than or equal to 90%, lower than or equal to 80%, lower than or equal to 70%, lower than or equal to 65%, lower than or equal to 58%, lower than or equal to 55%, lower than or equal to 50%, lower than or equal to 45%, lower than or equal to 40%, lower than or equal to 35%, lower than or equal to 30%, or lower than or equal to 25%.

The angularity of the single crystal particles 1 may, for example, range from 451 to 584. The angularity of the single crystal particles 1 may be, for example, greater than or equal to 475, greater than or equal to 500, greater than or equal to 502, greater than or equal to 525, greater than or equal to 550, greater than or equal to 553, or greater than or equal to 575. The angularity of the single crystal particles 1 may be, for example, less than or equal to 575, less than or equal to 553, less than or equal to 550, less than or equal to 525, less than or equal to 502, less than or equal to 500, or less than or equal to 475. When the angularity ranges from 400 to 599, the two-dimensional images of the particles tend to have shapes close to a rectangular shape. The three-dimensional shapes of the particles are considered to be shapes close to a rectangular parallelepiped.

Each of the single crystal particles 1 includes a lithium transition metal composite oxide. The lithium transition metal composite oxide has a crystal structure that belongs to R-3m space group. The structure is also referred to as "layered structure". The layered structure can be identified by XRD pattern.

In the XRD pattern of the positive electrode active material, the ratio "I₀₀₃/I₁₀₄" of the intensity "I₀₀₃" of a diffraction peak corresponding to the 003 plane to the intensity "I₁₀₄" of a diffraction peak corresponding to a 104 plane may be, for example, greater than 2.7. When the intensity ratio "I₀₀₃/I₁₀₄" is greater than 2.7, for example, improvements in cycle characteristics are expected. The intensity ratio "I₀₀₃/I₁₀₄" may be, for example, greater than or equal to 2.8, greater than or equal to 2.9, greater than or equal to 3.0, greater than or equal to 3.2, greater than or equal to 3.4, greater than or equal to 3.6, greater than or equal to 3.8, or greater than or equal to 4.0. The intensity ratio "I₀₀₃/I₁₀₄" may be, for example, less than or equal to 5.0, less than or equal to 4.0, less than or equal to 3.8, less than or equal to 3.6, less than or equal to 3.4, less than or equal to 3.2, or less than or equal to 3.0.

The lithium transition metal composite oxide includes Li, a transition metal (TM), and oxygen. The TM includes at least Ni. In other words, the lithium transition metal composite oxide includes at least Ni. Examples of the lithium transition metal composite oxide may include LiNiO₂. The TM may further include, for example, Co, Mn, or Al in addition to Ni.

Each of the single crystal particles 1 may have, for example, a composition represented by a general formula "LiₓNiₐCo_{b}Mn_{c}O_{y}". In the general formula, the Li composition ratio "x" may satisfy, for example, the relationship "0.1 ≤ x ≤ 1.5". The Li composition ratio "x" may be, for example, greater than or equal to 0.4, greater than or equal to 0.6, greater than or equal to 0.8, greater than or equal to 1.0, greater than or equal to 1.2, or greater than or equal to 1.4. The Li composition ratio "x" may be, for example, less than or equal to 1.4 or less than or equal to 1.2.

In the general formula, the O composition ratio "y" may satisfy, for example, the relationship "1.5 ≤ y ≤ 2.1". The O composition ratio "y" may be, for example, greater than or equal to 1.6, greater than or equal to 1.7, greater than or equal to 1.8, greater than or equal to 1.9, or greater than or equal to 2.0. The O composition ratio "y" may be, for example, less than or equal to 2.0, less than or equal to 1.9, less than or equal to 1.8, less than or equal to 1.7, or less than or equal to 1.6.

In the general formula, the Ni composition ratio "a", the Co composition ratio "b", and the Mn composition ratio "c" may satisfy the relationship "a + b + c = 1.0". The Ni composition ratio "a" may satisfy, for example, the relationship "0.5 ≤ a ≤ 1.0". The Ni composition ratio "a" may be, for example, greater than or equal to 0.6, greater than or equal to 0.7, greater than or equal to 0.8, or greater than or equal to 0.9. The Ni composition ratio "a" may be, for example, less than or equal to 0.9, less than or equal to 0.8, less than or equal to 0.7, or less than or equal to 0.6.

In the general formula, the Co composition ratio "b" may satisfy, for example, the relationship "0 ≤ b ≤ 0.3". The Co composition ratio "b" may be, for example, greater than or equal to 0.01, greater than or equal to 0.02, greater than or equal to 0.03, greater than or equal to 0.04, greater than or equal to 0.05, greater than or equal to 0.06, greater than or equal to 0.07, greater than or equal to 0.08, greater than or equal to 0.09, greater than or equal to 0.10, greater than or equal to 0.15, greater than or equal to 0.20, or greater than or equal to 0.25. The Co composition ratio "b" may be, for example, less than or equal to 0.25, less than or equal to 0.20, less than or equal to 0.15, less than or equal to 0.10, less than or equal to 0.09, less than or equal to 0.08, less than or equal to 0.07, less than or equal to 0.06, less than or equal to 0.05, less than or equal to 0.04, less than or equal to 0.03, less than or equal to 0.02, or less than or equal to 0.01.

In the general formula, the Mn composition ratio "c" may satisfy, for example, the relationship "0 ≤ c ≤ 0.3". The Mn composition ratio "c" may be, for example, greater than or equal to 0.01, greater than or equal to 0.02, greater than or equal to 0.03, greater than or equal to 0.04, greater than or equal to 0.05, greater than or equal to 0.06, greater than or equal to 0.07, greater than or equal to 0.08, greater than or equal to 0.09, greater than or equal to 0.10, greater than or equal to 0.15, greater than or equal to 0.20, or greater than or equal to 0.25. The Mn composition ratio "c" may be, for example, less than or equal to 0.25, less than or equal to 0.20, less than or equal to 0.15, less than or equal to 0.10, less than or equal to 0.09, less than or equal to 0.08, less than or equal to 0.07, less than or equal to 0.06, less than or equal to 0.05, less than or equal to 0.04, less than or equal to 0.03, less than or equal to 0.02, or less than or equal to 0.01.

In the general formula, all or some of Mn may be substituted with Al or the like. In other words, the lithium transition metal composite oxide may have, for example, a composition represented by a general formula "LiₓNiₐCo_{b}Al_{c}O_{y}". The range of the Al composition ratio "c" is similar to that of the Mn composition ratio "c".

A selected dopant may be added to the lithium transition metal composite oxide. The dopant represents an element other than Li, Ni, Co, Mn, and O. The dopant may include at least one selected from the group consisting of, for example, Zr, Mo, W, Mg, Ca, Na, Fe, Cr, Zn, Si, Sn, Al, and Ag. The composition ratio of the dopant may be, for example, greater than or equal to 0.005, greater than or equal to 0.01, greater than or equal to 0.02, greater than or equal to 0.03, or greater than or equal to 0.04. The composition ratio of the dopant may be, for example, less than or equal to 0.05, less than or equal to 0.04, less than or equal to 0.03, less than or equal to 0.02, or less than or equal to 0.01.

The positive electrode active material may include other components as long as the positive electrode active material includes the lithium transition metal composite oxide. The mixing ratio (mass ratio) between the lithium transition metal composite oxide and other components may be, for example, "Lithium transition metal composite oxide/Other components = 9/1 to 1/9", "Lithium transition metal composite oxide/Other components = 8/2 to 2/8", "Lithium transition metal composite oxide/Other components = 7/3 to 3/7", or "Lithium transition metal composite oxide/Other components = 6/4 to 4/6". The positive electrode active material may be, for example, a mixture of the powder of the lithium transition metal composite oxide and the powder of other components. The other components may include at least one selected from the group consisting of, for example, lithium iron phosphate (olivine structure), lithium manganese phosphate (olivine structure), lithium manganese iron phosphate (olivine structure), LiMnO₂ (rock salt structure), Li(NiMn)₂O₄ (spinel structure), and LiCoO₂ (layered structure). The other components may be single crystal particles or may be polycrystalline particles.

### Lithium Ion Secondary Battery

### Liquid Battery

In some present embodiments, the battery can be a liquid battery. A "liquid battery" refers to a battery that includes an electrolytic solution. For example, a polymer battery belongs to a liquid battery because the polymer battery includes an electrolytic solution. In some present embodiments, the battery has a monopolar structure. In the monopolar structure, a power generation element may be of a wound type or may be of a stacked type. In some present embodiments, the battery has a bipolar structure. In an example, a battery with a bipolar structure (bipolar battery) will be described.

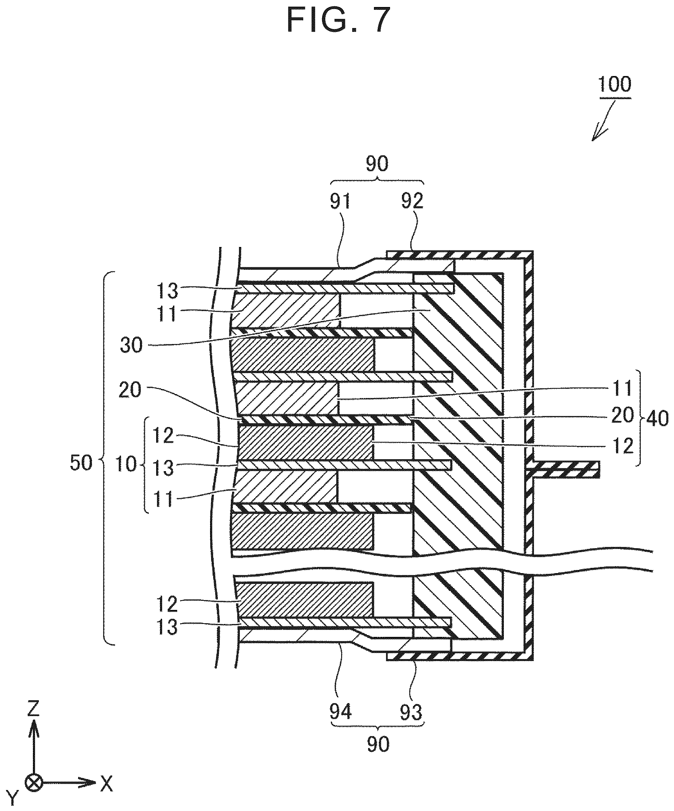

FIG. 6 is a schematic perspective view of a lithium ion secondary battery in the present embodiment. FIG. 7 is a schematic sectional view taken along the line VII-VII in FIG. 6. Hereinafter, a "normal direction" represents the direction normal to the surface of a sheet-shaped member (such as a foil and an electrode). An "in-plane direction" represents a selected direction orthogonal to the normal direction. In the diagram of the present embodiment, the Z-axis direction corresponds to the normal direction. The X-axis direction and the Y-axis direction are examples of the in-plane direction.

A battery 100 includes an outer case 90 and a power generation element 50. The outer case 90 houses the power generation element 50. The outer case 90 may include, for example, a first current collector plate 91, a first laminated film 92, a second laminated film 93, and a second current collector plate 94. The first laminated film 92 and the second laminated film 93 are joined to each other at the end in the in-plane direction. At the joint between the first laminated film 92 and the second laminated film 93, a seal member (not shown) may be interposed between the first laminated film 92 and the second laminated film 93.

The first current collector plate 91 and the second current collector plate 94 are joined to the power generation element 50 at the ends in the stacking direction (Z-axis direction). The first laminated film 92 is joined to the first current collector plate 91. The second laminated film 93 is joined to the second current collector plate 94. At the joint between the current collector plate and the laminated film, a seal member (not shown) may be interposed between the current collector plate and the laminated film.

The power generation element 50 includes a plurality of bipolar electrodes 10. The bipolar electrodes 10 are stacked in the normal direction (Z-axis direction). Each of the bipolar electrodes 10 includes a positive electrode layer 11, a current collector foil 13, and a negative electrode layer 12 in this order in the normal direction,. In the in-plane direction (for example, the X-axis direction), the current collector foil 13 extends outward compared to the positive electrode layer 11 and the negative electrode layer 12. For example, the current collector foil 13 may extend outward compared to the positive electrode layer 11 and the negative electrode layer 12 over the entire circumference in the in-plane direction.

The current collector foil 13 is a conductor. Examples of the current collector foil 13 may include a metal foil and a conductive resin layer. For example, the current collector foil 13 may be formed by bonding Al foil and Cu foil together. Carbon material may be applied to the surface of the current collector foil 13. Examples of the carbon material may include carbon black.

The power generation element 50 includes a seal member 30. At the end in the in-plane direction, the seal member 30 is joined to the current collector foils 13. The seal member 30 may be, for example, thermally welded to the current collector foils 13. For example, the seal member 30 may be disposed around the entire outer edge in the in-plane direction. Examples of the seal member 30 may include resin material. The seal member 30 seals the space between any adjacent current collector foils 13 in the normal direction. The seal member 30 seals the space between the current collector foils 13 to define cells 40. The cells 40 are minimum units of the power generation element 50. The battery 100 can also be referred to as a "bipolar module" because the battery 100 includes the plurality of cells 40. Each of the cells 40 is hermetically sealed. The cells 40 are isolated from one another. Each of the cells 40 includes the positive electrode layer 11, a separator 20, the negative electrode layer 12, and an electrolytic solution.

### Positive Electrode Layer

The positive electrode layer 11 adheres to one side of the current collector foil 13. For example, grooves may be formed in the positive electrode layer 11. The positive electrode layer 11 may be formed, for example, in a striped pattern. The positive electrode layer 11 includes a positive electrode active material. In other words, the battery 100 includes a positive electrode active material. The details of the positive electrode active material are as described above.

The positive electrode layer 11 may further include, for example, a conductive material and a binder in addition to the positive electrode active material. The formulation amount of conductive material may, for example, range from 0.1 parts by mass to 10 parts by mass relative to 100 parts by mass of the positive electrode active material. The conductive material can include any component. The conductive material may include at least one selected from the group consisting of, for example, graphite, acetylene black (AB), Ketjen black (registered trademark), vapor-grown carbon fiber (VGCF), carbon nanotubes (CNT), and graphene flakes (GF).

The formulation amount of binder may, for example, range from 0.1 parts by mass to 10 parts by mass relative to 100 parts by mass of the positive electrode active material. The binder can include any component. The binder may include at least one selected from the group consisting of, for example, polyvinylidene fluoride (PVdF), vinylidene fluoride-hexafluoropropylene copolymer (PVdF-HFP), polytetrafluoroethylene (PTFE), carboxymethyl cellulose (CMC), polyacrylic acid (PAA), polyvinyl alcohol (PVA), polyvinylpyrrolidone (PVP), polyoxyethylene alkyl ether, and derivatives thereof.

The positive electrode layer 11 may further include, for example, an inorganic filler, an organic filler, a solid electrolyte, a surface modifier, a dispersant, a lubricant, a flame retardant, a protective agent, flux, a coupling agent, and an adsorbent. The positive electrode active material layer may include, for example, polyoxyethylene allyl phenyl ether phosphate, zeolite, a silane coupling agent, MoS₂, or WO₃.

### Negative Electrode Layer

The negative electrode layer 12 adheres to one side of the current collector foil 13. The negative electrode layer 12 is disposed on the opposite side from the positive electrode layer 11. The negative electrode layer 12 may have a larger area compared to the positive electrode layer 11. The negative electrode layer 12 includes a negative electrode active material.

The negative electrode active material may be, for example, in the form of particles or in the form of sheet. The D50 of the negative electrode active material may be, for example, greater than or equal to 1 µm, greater than or equal to 5 µm, or greater than or equal to 10 µm. The D50 of the negative electrode active material may be, for example, less than or equal to 30 µm, less than or equal to 20 µm, may be less than or equal to 15 µm, or less than or equal to 10 µm.

The negative electrode active material may include any component. The negative electrode active material may include at least one selected from the group consisting of, for example, a carbon-based active material, an alloy-based active material, an Si-C composite material, Li metal, an Li-based alloy, and lithium titanate. In some present embodiments, the battery may be an Li metal negative electrode battery.

The carbon-based active material may include at least one selected from the group consisting of, for example, graphite, soft carbon, and hard carbon. "Graphite" is a generic name of natural graphite and artificial graphite. Graphite may be a mixture of natural graphite and artificial graphite. A mixing ratio (mass ratio) may be, for example, "Natural graphite/Artificial graphite = 1/9 to 9/1", "Natural graphite/Artificial graphite = 2/8 to 8/2", or "Natural graphite/Artificial graphite = 3/7 to 7/3".

The surface of graphite may be coated with, for example, amorphous carbon. The surface of graphite may be coated with, for example, a heterogeneous material. The heterogeneous material may include at least one selected from the group consisting of, for example, P, W, Al, and O. The heterogeneous material may include at least one selected from the group consisting of, for example, Al(OH)₃, AlOOH, Al₂O₃, WO₃, Li₂CO₃, LiHCO₃, and Li₃PO₄.

The alloy-based active material may include at least one selected from the group consisting of, for example, Si, Li silicate, SiO, an Si-based alloy, tin (Sn), SnO, and an Sn-based alloy.

SiO may have, for example, a composition represented by a general formula "SiOₓ". In the general formula, for example, the relationship "0 < x < 2", "0.5 ≤ x ≤ 1.5", or "0.8 ≤ x ≤ 1.2" may be satisfied.

The "Si-C composite material" refers to a composite material made of carbon-based active material (such as graphite) and alloy-based active material (such as Si). For example, Si fine particles may be dispersed in carbon particles. For example, Si fine particles may be dispersed in graphite particles. For example, Li silicate particles may be coated with carbon material (such as amorphous carbon).

### Separator

The separator 20 can separate the positive electrode layer 11 from the negative electrode layer 12. The separator 20 has electrical insulation properties. The separator 20 may include at least one selected from the group consisting of, for example, a resin film (polymer film), an inorganic particle layer, and an organic particle layer. The separator 20 may include, for example, a resin film and an inorganic particle layer.

The resin film is porous. The resin film may include, for example, a microporous membrane or a nonwoven fabric. The resin film includes a resin backbone. The resin backbone may be, for example, continuous in a mesh form. Pores are formed in gaps of the resin backbone. The resin film can allow an electrolytic solution to pass through. The resin film may have, for example, an average pore size of less than or equal to 1 µm. The average pore size of the resin film may, for example, range from 0.01 µm to 1 µm or from 0.1 µm to 0.5 µm. The "average pore size" can be measured by mercury intrusion method. The Gurley value of the resin film may, for example, range from 50 s/100cm³ to 250 s/100cm³. A "Gurley value" can be measured by using Gurley test method.

The resin film may include at least one selected from the group consisting of, for example, an olefin resin, a polyurethane resin, a polyamide resin, a cellulose resin, a polyether resin, an acrylic resin, and a polyester resin. The resin film may include at least one selected from the group consisting of, for example, polyethylene (PE), polypropylene (PP), polyamide (PA), polyamide imide (PAI), polyimide (PI), aromatic polyamide (aramid), polyphenylene ether (PPE), and derivatives thereof. The resin film can be formed by, for example, stretching or phase separation. The thickness of the resin film may, for example, range from 5 µm to 50 µm or from 10 µm to 25 µm.

The resin film may have, for example, a single layer structure. The resin film may consist of, for example, a PE layer. The backbone of the PE layer is formed of PE. The PE layer can have a shutdown function. The resin film may have, for example, a multilayer structure. The resin film may include, for example, a PP layer and a PE layer. The backbone of the PP layer is formed of PP. The resin film may have, for example, a three-layer structure. The resin film may be formed by, for example, stacking a PP layer, a PE layer, and a PP layer in this order. The thickness of the PE layer may, for example, range from 5 µm to 20 µm. The thickness of the PP layer may, for example, range from 3 µm to 10 µm.

The inorganic particle layer may be formed on the surface of the resin film. The inorganic particle layer may be formed only on one side of the resin film or may be formed on both sides. The inorganic particle layer may be formed on the surface facing the positive electrode layer 11 or on the surface facing the negative electrode layer 12. The inorganic particle layer may be formed on the surface of the positive electrode layer 11 or on the surface of the negative electrode layer 12.

The inorganic particle layer is porous. The inorganic particle layer includes inorganic particles. The inorganic particles can also be referred to as "inorganic filler". Pores are formed in gaps between the inorganic particles. The thickness of the inorganic particle layer may, for example, range from 0.5 µm to 10 µm or from 1 µm to 5 µm. The inorganic particles may include, for example, heat-resistant material. The inorganic particle layer including heat-resistant material is also referred to as "heat resistance layer (HRL)". The inorganic particles may include at least one selected from the group consisting of, for example, boehmite, alumina, zirconia, titania, magnesia, and silica. The inorganic particles can have any shape. The inorganic particles may have, for example, a spherical shape, a rod shape, a plate shape, or a fibrous shape. The D50 of the inorganic particles may, for example, range from 0.1 µm to 10 µm or from 0.5 µm to 3 µm. The inorganic particle layer may further include a binder. The binder may include at least one selected from the group consisting of, for example, an acrylic resin, a polyamide resin, a fluororesin, an aromatic polyether resin, and a liquid crystal polyester resin.

The separator 20 may include, for example, an organic particle layer. The separator 20 may include, for example, an organic particle layer instead of a resin film. The separator 20 may include, for example, an organic particle layer instead of an inorganic particle layer. The separator 20 may include both a resin film and an organic particle layer. The separator 20 may include both an inorganic particle layer and an organic particle layer. The separator 20 may include a resin film, an inorganic particle layer, and an organic particle layer.

The thickness of the organic particle layer may, for example, range from 0.1 µm to 50 µm, from 0.5 µm to 20 µm, from 0.5 µm to 10 µm, or from 1 µm to 5 µm. The organic particle layer includes organic particles. The organic particles can also be referred to as "organic filler". The organic particles may include heat-resistant material. The organic particles may include at least one selected from the group consisting of, for example, PE, PP, PTFE, PI, PAI, PA, aramid. The organic particles may have, for example, a spherical shape, a rod shape, a plate shape, or a fibrous shape. The D50 of the organic particles may, for example, range from 0.1 µm to 10 µm or from 0.5 µm to 3 µm.

The separator 20 may include, for example, a mixed layer. The mixed layer includes both inorganic particles and organic particles.

### Electrolytic Solution

The electrolytic solution is a liquid electrolyte. The electrolytic solution includes a solute and a solvent. The concentration of the solute may, for example, range from 0.5 mol/L to 1 mol/L, from 1 mol/L to 1.5 mol/L, from 1.5 mol/L to 2 mol/L, from 2 mol/L to 2.5 mol/L, or from 2.5 mol/L to 3 mol/L. "mol/L" can be represented as "M". The solute includes a supporting electrolyte (Li salt). The solute may include, for example, an inorganic acid salt, an imide salt, an oxalato complex, or a halide. The solute may include at least one selected from the group consisting of, for example, LiPF₆, LiBF₄, LiClO₄, LiAsF₆, LiSbF₆, LiN(SO₂F)₂ "LiFSI", LiN(SO₂CF₃)₂ "LiTFSI", LiB(C₂O₄)₂ "LiBOB", LiBF₂(C₂O₄) "LiDFOB", LiPF₂(C₂O₄)₂ "LiDFOP", LiPO₂F₂, FSO₃Li, LiI, LiBr, and derivatives thereof.

The electrolytic solution may include, for example, a carbonate solvent (carbonate ester solvent). The solvent may include, for example, a cyclic carbonate, a chain carbonate, or a fluorinated carbonate. The solvent may include at least one selected from the group consisting of, for example, ethylene carbonate (EC), propylene carbonate (PC), butylene carbonate (BC), dimethyl carbonate (DMC), diethyl carbonate (DEC), ethyl methyl carbonate (EMC), monofluoroethylene carbonate (FEC), difluoroethylene carbonate, 4,4-difluoroethylene carbonate, trifluoroethylene carbonate, perfluoroethylene carbonate, fluoropropylene carbonate, difluoropropylene carbonate, and derivatives thereof.

The solvent may include a cyclic carbonate (such as EC, PC, and FEC), or a chain carbonate (such as EMC, DMC, and DEC). The mixing ratio (volume ratio) between the cyclic carbonate and the chain carbonate may be, for example, "Cyclic carbonate/Chain carbonate = 1/9 to 4/6", "Cyclic carbonate/Chain carbonate = 2/8 to 3/7", or "Cyclic carbonate/Chain carbonate = 3/7 to 4/6".

The solvent may include a cyclic carbonate (such as EC and PC) and a fluorinated cyclic carbonate (such as FEC). The mixing ratio (volume ratio) between the cyclic carbonate and the fluorinated cyclic carbonate may be, for example, "Cyclic carbonate/Fluorinated cyclic carbonate = 99/1 to 90/10", "Cyclic carbonate/Fluorinated cyclic carbonate = 9/1 to 1/9", "Cyclic carbonate/Fluorinated cyclic carbonate = 9/1 to 7/3", or "Cyclic carbonate/Fluorinated cyclic carbonate = 3/7 to 1/9".

The solvent may include, for example, EC, FEC, EMC, DMC, and DEC. The volume ratio of the components may satisfy, for example, the relationship expressed by the relational expression "V_{EC} + V_{FEC} + V_{EMC} + V_{DMC} + V_{DEC} = 10". In the relational expression, "V_{EC}, V_{FEC}, V_{EMC}, V_{DMC}, and V_{DEC}" represent the volume ratios of EC, FEC, EMC, DMC, and DEC, respectively. The relationships "1 ≤ V_{EC} ≤ 4", "0 ≤ V_{FEC} ≤ 3", "V_{EC} + V_{FEC} ≤ 4", "0 ≤ V_{EMC} ≤ 9", "0 ≤ V_{DMC} ≤ 9", "0 ≤ V_{DEC} ≤ 9", and "6 ≤ V_{EMC} + V_{DMC} + V_{DEC} ≤ 9" are satisfied. For example, the relationship "1 ≤ V_{EC} ≤ 2" or the relationship "2 ≤ V_{EC} ≤ 3" may be satisfied. For example, the relationship "1 ≤ V_{FEC} ≤ 2" or the relationship "2 ≤ V_{FEC} ≤ 4" may be satisfied. For example, the relationship "3 ≤ V_{EMC} ≤ 4" or the relationship "6 ≤ V_{EMC} ≤ 8" may be satisfied. For example, the relationship "3 ≤ V_{DMC} ≤ 4" or the relationship "6 ≤ V_{DMC} ≤ 8" may be satisfied. For example, the relationship "3 ≤ V_{DEC} ≤ 4" or the relationship "6 ≤ V_{DEC} ≤ 8" may be satisfied.

The solvent may have a composition of, for example, "EC/EMC = 3/7" , "EC/DMC = 3/7", "EC/FEC/DEC = 1/2/7", "EC/DMC/EMC = 3/4/3", "EC/DMC/EMC = 3/3/4", "EC/FEC/DMC/EMC = 2/1/4/3", "EC/FEC/DMC/EMC = 1/2/4/3", "EC/FEC/DMC/EMC = 2/1/3/4", or "EC/FEC/DMC/EMC = 1/2/3/4" in volume ratio.

The electrolytic solution may include an ether solvent. The electrolytic solution may include at least one selected from the group consisting of, for example, tetrahydrofuran (THF), 1,4-dioxane (DOX), 1,3-dioxolane (DOL), 1,2-dimethoxyethane (DME), 1,2-diethoxyethane (DEE), hydrofluoroether (HFE), ethyl glyme, triglyme, tetraglyme, and derivatives thereof.

The electrolytic solution may include any additive. The additive amount (mass fraction relative to the entire electrolytic solution) may, for example, range from 0.01% to 5%, from 0.05% to 3%, or from 0.1% to 1%. Examples of the additive may include a solid electrolyte interphase (SEI) formation promoter, an SEI formation inhibitor, a gas generator, an overcharge preventer, a flame retardant, an oxidation inhibitor, an electrode protectant, and a surfactant.

The additive may include at least one selected from the group consisting of, for example, vinylene carbonate (VC), vinyl ethylene carbonate (VEC), 1,3-propane sultone (PS), tert-amylbenzene, 1,4-di-tert-butylbenzene, biphenyl (BP), cyclohexylbenzene (CHB), ethylene sulfite (ES), ethylene sulfate (DTD), γ-butyrolactone, a phosphazene compound, a carboxylic acid ester [such as methyl formate (MF), methyl acetate (MA), methyl propionate (MP), and diethyl malonate (DEM)], a fluorobenzene [such as monofluorobenzene (FB), 1,2-difluorobenzene, 1,3-difluorobenzene, 1,4-difluorobenzene, 1,2,3-trifluorobenzene, 1,2,4-trifluorobenzene, 1,3,5-trifluorobenzene, 1,2,3,4-tetrafluorobenzene, 1,2,3,5-tetrafluorobenzene, 1,2,4,5-tetrafluorobenzene, pentafluorobenzene, and hexafluorobenzene), a fluorotoluene (such as 2-fluorotoluene, 3-fluorotoluene, 4-fluorotoluene, 2,3-difluorotoluene, 2,4-difluorotoluene, 2,5-difluorotoluene, 2,6-difluorotoluene, 3,4-difluorotoluene, and octafluorotoluene), a benzotrifluoride (such as benzotrifluoride, 2-fluorobenzotrifluoride, 3-fluorobenzotrifluoride, 4-fluorobenzotrifluoride, 2-methylbenzotrifluoride, 3-methylbenzotrifluoride, and 4-methylbenzotrifluoride), a fluoroxylene (such as 3-fluoro-o-xylene, 4-fluoro-o-xylene, 2-fluoro-m-xylene, and 5-fluoro-m-xylene), a sulfur-containing heterocyclic compound (such as benzothiazole, 2-methylbenzothiazole, and tetrathiafulvalene), a nitrile compound (such as adiponitrile and succinonitrile), a phosphoric acid ester (such as trimethyl phosphate and triethyl phosphate), a carboxylic acid anhydride (such as acetic anhydride, propionic anhydride, oxalic anhydride, succinic anhydride, maleic anhydride, phthalic anhydride, and benzoic anhydride), an alcohol (such as methanol, ethanol, n-propyl alcohol, ethylene glycol, and diethylene glycol monomethyl ether), and derivatives thereof.

The components described above as the solute and the solvent may be used as trace components (additives). The additive may include at least one selected from the group consisting of, for example, LiBF₄, LiFSI, LiTFSI, LiBOB, LiDFOB, LiDFOP, LiPO₂F₂, FSO₃Li, LiI, LiBr, HFE, DOX, PC, FEC, and derivatives thereof.

The electrolytic solution may include an ionic liquid. The ionic liquid may include at least one selected from the group consisting of, for example, a sulfonium salt, an ammonium salt, a pyridinium salt, a piperidinium salt, a pyrrolidinium salt, a morpholinium salt, a phosphonium salt, an imidazolium salt, and derivatives thereof.

In some present embodiments, the battery may include a gel electrolyte. In other words, the battery may be a polymer battery. The gel electrolyte may include an electrolytic solution and a polymer material. The polymer material may form a polymer matrix. The polymer material may include at least one selected from the group consisting of, for example, PVdF, PVdF-HFP, polyacrylonitrile (PAN), PVdF-PAN, polyethylene oxide (PEO), polyethylene glycol (PEG), and derivatives thereof.

### All-Solid Battery

In some present embodiments, the battery can be an all-solid battery. The all-solid battery may have a bipolar structure. The all-solid battery includes a solid electrolyte instead of the electrolytic solution and the separator 20. The solid electrolyte may also be included in the positive electrode layer 11 and the negative electrode layer 12. The solid electrolyte layer separates the negative electrode layer 12 from the positive electrode layer 11 instead of the separator 20. The solid electrolyte layer includes, for example, a solid electrolyte and a binder.

The solid electrolyte may be, for example, powder. The D50 of the solid electrolyte may be, for example, greater than or equal to 0.1 µm, greater than or equal to 0.2 µm, greater than or equal to 0.3 µm, greater than or equal to 0.4 µm, greater than or equal to 0.5 µm, greater than or equal to 0.6 µm, greater than or equal to 0.7 µm, greater than or equal to 0.8 µm, greater than or equal to 0.9 µm, or greater than or equal to 1 µm. The D50 of the solid electrolyte may be, for example, less than or equal to 5 µm, less than or equal to 4 µm, less than or equal to 3 µm, less than or equal to 2 µm, or less than or equal to 1 µm.

The solid electrolyte may include at least one selected from the group consisting of, for example, a sulfide solid electrolyte, a halide solid electrolyte, an oxide solid electrolyte, a hydride solid electrolyte, and a nitride solid electrolyte.

The sulfide solid electrolyte may include at least one selected from a group consisting of, for example, an amorphous phase, a crystalline phase, and a glass-ceramic (crystallized glass) phase. The crystalline phase may be, for example, an argyrodite type or LGPS type. The sulfide solid electrolyte includes Li and sulfur (S). The sulfide solid electrolyte may further include any component in addition to Li and S.

The sulfide solid electrolyte may include at least one selected from the group consisting of, for example, LiI-LiBr-Li₃PS₄, Li₂S-SiS₂, LiI-Li₂S-SiS₂, Lil-Li₂S-P₂S₅, LiI-Li₂O-Li₂S-P₂S₅, LiI-Li₂S-P₂O₅, LiI-Li₃PO₄-P₂S₅, Li₂S-GeS₂-P₂S₅, Li₂S-P₂S₅, Li₁₀GeP₂S₁₂, Li₄P₂S₆, Li₇P₃S₁₁, Li₃PS₄, and Li₇PS₆.

For example, "LiI-LiBr-Li₃PS₄" represents a sulfide solid electrolyte produced by mixing LiI, LiBr, and Li₃PS₄ in a selected molar ratio. For example, the sulfide solid electrolyte may be produced by using a mechanochemical method. The mixing ratio may be specified by prefixing a number to each material. For example, "10LiI-15LiBr-75Li₃PS₄" represents that the mixing ratio is "LiI/LiBr/Li₃PS₄ = 10/15/75 (molar ratio)".

The sulfide solid electrolyte may have, for example, a composition represented by a general formula "xLi₂S-(1 - x)P₂S₅". In the general formula, "x" may be, for example, greater than zero, greater than or equal to 0.1, greater than or equal to 0.2, greater than or equal to 0.25, greater than or equal to 0.3, greater than or equal to 0.4, greater than or equal to 0.5, greater than or equal to 0.6, greater than or equal to 0.7, greater than or equal to 0.75, greater than or equal to 0.8, or greater than or equal to 0.9. "x" may be, for example, less than or equal to one, less than or equal to 0.9, less than or equal to 0.8, less than or equal to 0.7, less than or equal to 0.75, less than or equal to 0.6, less than or equal to 0.5, less than or equal to 0.4, less than or equal to 0.3, less than or equal to 0.2, or less than or equal to 0.1. When, for example, "x = 0.75", "xLi₂S-(1 - x)P₂S₅" can have a composition of Li₃PS₄.

The sulfide solid electrolyte may have, for example, a composition represented by a general formula "yLiI-zLiBr-(100 - y - z)[xLi₂S-(1 - x)P₂S₅]". In the general formula, "x" may be, for example, greater than or equal to 0.5, greater than or equal to 0.6, greater than or equal to 0.7, greater than or equal to 0.75, greater than or equal to 0.8, or greater than or equal to 0.9. "x" may be, for example, less than or equal to one, less than or equal to 0.9, less than or equal to 0.8, less than or equal to 0.75, less than or equal to 0.7, or less than or equal to 0.6. "y" may be, for example, greater than or equal to zero, greater than or equal to five, greater than or equal to 10, greater than or equal to 15, greater than or equal to 20, or greater than or equal to 25. "y" may be, for example, less than or equal to 30, less than or equal to 25, less than or equal to 20, less than or equal to 15, less than or equal to 10, or less than or equal to five. "z" may be, for example, greater than or equal to zero, greater than or equal to five, greater than or equal to 10, greater than or equal to 15, greater than or equal to 20, or greater than or equal to 25. "z" may be, for example, less than or equal to 30, less than or equal to 25, less than or equal to 20, less than or equal to 15, less than or equal to 10, or less than or equal to five.

The sulfide solid electrolyte may have, for example, a composition represented by a general formula "Li_{(7 - x} - _{2y)}PS_{(6 - x - y)}X_{y}". In the general formula, the relationships "0 < 7 - x - 2y", "0 < 6 - x - y", "0 ≤ x", and "0 ≤ y" are satisfied. "X" may include at least one selected from the group consisting of, for example, fluorine (F), chlorine (Cl), bromine (Br), and iodine (I).

The sulfide solid electrolyte may have, for example, a composition represented by a general formula "Li₍₄ - ₓ₎M₍₁ - ₓ₎PₓS₄". In the general formula, "x" may be, for example, greater than 0, greater than or equal to 0.1, greater than or equal to 0.2, greater than or equal to 0.3, greater than or equal to 0.4, greater than or equal to 0.5, greater than or equal to 0.6, greater than or equal to 0.7, greater than or equal to 0.8, or greater than or equal to 0.9. "x" may be, for example, less than one, less than or equal to 0.9, less than or equal to 0.8, less than or equal to 0.7, less than or equal to 0.6, less than or equal to 0.5, less than or equal to 0.4, less than or equal to 0.3, less than or equal to 0.2, or less than or equal to 0.1. "M" may include at least one selected from the group consisting of, for example, Al, Zn, In, Ge, Si, Sn, Sb, Ga, and Bi.

The sulfide solid electrolyte may have, for example, a composition represented by a general formula "Li_{(10 + x)}Ge_{(1 + x)}P_{(2 - x)}S₁₂". In the general formula, "x" may be, for example, greater than or equal to zero, greater than or equal to 0.1, greater than or equal to 0.2, greater than or equal to 0.3, greater than or equal to 0.4, greater than or equal to 0.5, or greater than or equal to 0.6. "x" may be, for example, less than or equal to 0.7, less than or equal to 0.6, less than or equal to 0.5, less than or equal to 0.4, less than or equal to 0.3, less than or equal to 0.2, or less than or equal to 0.1. The sulfide solid electrolyte represented by the general formula may include, for example, an LGPS crystalline phase.

The halide solid electrolyte may have, for example, a composition represented by a general formula "Li₍₆ - ₙₐ₎MₐX₆". In the general formula, "n" represents the oxidation number of "M". "M" may include, for example, an atom having an oxidation number of +3. "M" may include, for example, an atom having an oxidation number of +4. "M" may include at least one selected from the group consisting of, for example, Y, Al, Ti, Zr, Ca, and Mg. For example, the relationship "0 < a < 2" may be satisfied. "X" may include at least one selected from the group consisting of, for example, F, Cl, Br, and I.

The halide solid electrolyte may have, for example, a composition represented by a general formula "Li₍₃ - ₐ₎TiₐAl₍₁ - ₂₎F₆". In the general formula, "a" may be, for example, greater than or equal to zero, greater than or equal to 0.1, greater than or equal to 0.2, greater than or equal to 0.3, greater than or equal to 0.4, greater than or equal to 0.5, greater than or equal to 0.6, greater than or equal to 0.7, greater than or equal to 0.8, or greater than or equal to 0.9. "a" may be, for example, less than or equal to one, less than or equal to 0.9, less than or equal to 0.8, less than or equal to 0.7, less than or equal to 0.6, less than or equal to 0.5, less than or equal to 0.4, less than or equal to 0.3, less than or equal to 0.2, or less than or equal to 0.1.

The halide solid electrolyte may have, for example, a composition represented by a general formula "Li₃YClₐBr_{b}I_{(6 - a - b)}". In the general formula, for example, the relationship "0 ≤ a + b ≤ 6" may be satisfied. "a" may be, for example, greater than or equal to zero, greater than or equal to one, greater than or equal to two, greater than or equal to three, greater than or equal to four, or greater than or equal to five. "a" may be, for example, less than or equal to six, less than or equal to five, less than or equal to four, less than or equal to three, less than or equal to two, or less than or equal to one. "b" may be, for example, greater than or equal to zero, greater than or equal to one, greater than or equal to two, greater than or equal to three, greater than or equal to four, or greater than or equal to five. "b" may be, for example, less than or equal to six, less than or equal to five, less than or equal to four, less than or equal to three, less than or equal to two, or less than or equal to one.

The oxide solid electrolyte may include at least one selected from the group consisting of, for example, LiNbO₃, Li_{1.5}Al_{0.5}Ge_{1.5}(PO₄)₃, La_{(2/3} - ₓ₎Li₃ₓTiO₃, and Li₇La₃Zr₂O₁₂. The hydride solid electrolyte may include, for example, LiBH₄. The nitride solid electrolyte may include, for example, Li₃N, or Li₃BN₂.

### Example

### Preparation of Samples

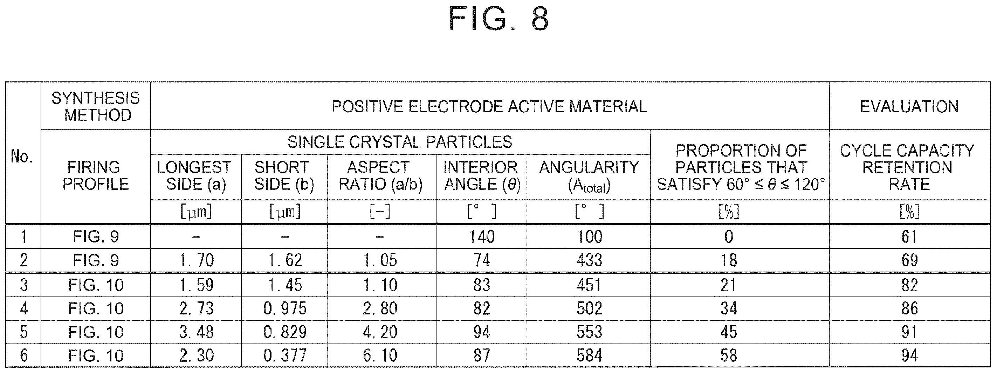

FIG. 8 is a table that shows experimental results. Positive electrode active materials (LiNi_{0.90}Co_{0.05}Mn_{0.05}O₂) No.1, No. 2, No. 3, No. 4, No. 5, and No.6 were manufactured according to the following procedure.

### Preparation of Raw Material Liquid

A raw material liquid is prepared by dissolving NiSO₄, CoSO₄, and MnSO₄ into ion-exchanged water. The formulation ratio among NiSO₄, CoSO₄, and MnSO₄ is adjusted to "Ni/Co/Mn = 90/5/5 (molar ratio)". The concentration of amount of substance of the raw material liquid is 0.2%.

### Hydrothermal Synthesis

A predetermined amount of NH₃ aqueous solution is put in a reaction vessel. While the reaction vessel is stirred with a stirrer, nitrogen substitution is performed. The pH of the aqueous solution is adjusted to alkaline by adding NaOH into the reaction vessel. The deposit of TM hydroxide is formed by dripping the raw material liquid while the temperature and pH of the aqueous solution are adjusted so as to be kept within certain ranges (substantially constant values). The deposit is subjected to dewatering and temporary firing. A temporary firing temperature ranges from 120°C to 220°C. A temporary firing time ranges from four hours to 10 hours. A temporary firing pressure ranges from 0.2 MPa to 1.0 MPa.

### Recovery of Precursor

After temporary firing, the deposit is washed with water. The residue (TM hydroxide) is recovered by filtration. The TM hydroxide is dried for 12 hours at 110°C, with the result that moisture is removed. Thus, the precursor (TM hydroxide) is prepared.

### Mixing of Li Raw Material

A mixture is prepared by mixing the precursor (TM hydroxide) and a lithium compound (such as LiOH and Li₂CO₃). In this experiment, the ratio "Li/TM" of the amount of substance of Li to the total amount of substance of transition metal (TM) is adjusted so as to exceed one. As a result, during firing, an excessive lithium compound forms a molten salt (flux), which promotes the single crystallization of the positive electrode active material.

### Firing

The mixture is subjected to heat treatment (firing). Firing can be performed, for example, in a muffle furnace. The firing atmosphere may be, for example, an oxygen atmosphere.

### One-Step Firing

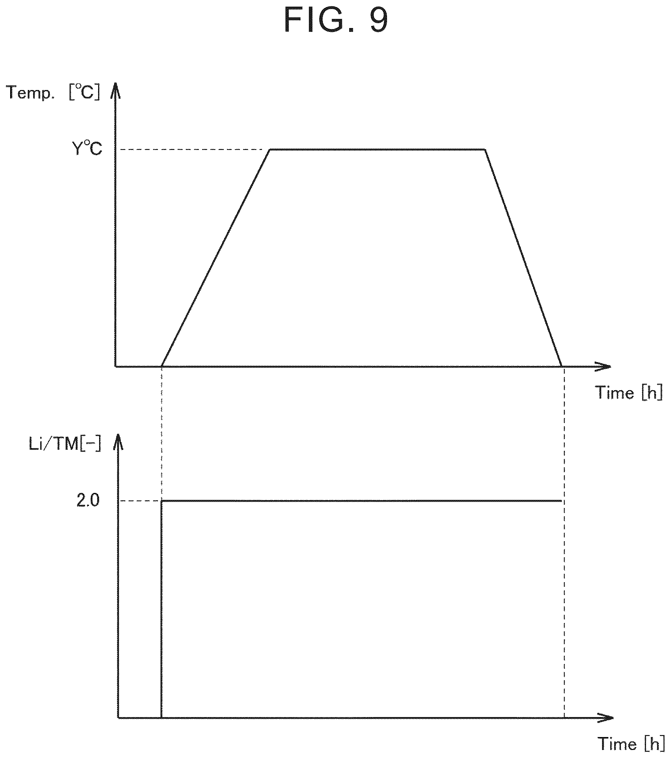

FIG. 9 is a first firing profile. Firing for No. 1 and No. 2 is represented by the first firing profile. A mixture is prepared by mixing the precursor and the lithium compound such that "Li/TM = 2.0". The mixture is placed in a firing furnace. The furnace temperature is increased to Y°C within the range of 800°C to 1100°C. Y°C is maintained for a predetermined time. The duration at Y°C ranges from five hours to 15 hours. After the predetermined time has elapsed, the furnace temperature is decreased to room temperature. As a result, the positive electrode active material is synthesized.

### Four-Step Firing

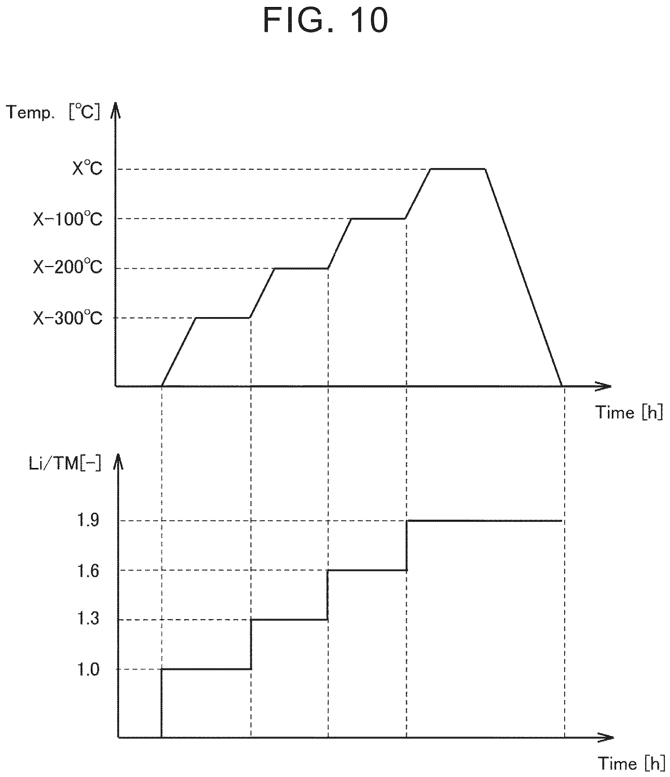

FIG. 10 is a second firing profile. Firing for No. 3 to No. 6 is represented by the second firing profile. Initially, a mixture is prepared by mixing the precursor and the lithium compound such that "Li/TM = 1.0". The mixture is placed in the firing furnace. The furnace temperature is increased to X - 300(°C). The temperature of X - 300(°C) is maintained for a predetermined time. After the predetermined time has elapsed, a lithium compound is added to the mixture such that "Li/TM = 1.3" in total. After the addition of the lithium compound, the furnace temperature is increased to X - 200(°C). X - 200(°C) is maintained for a predetermined time. After the predetermined time has elapsed, a lithium compound is added to the mixture such that "Li/TM = 1.6" in total. After the addition of the lithium compound, the furnace temperature is increased to X - 100(°C). X - 100(°C) is maintained for a predetermined time. After the predetermined time has elapsed, a lithium compound is added to the mixture such that "Li/TM = 1.9" in total. After the addition of the lithium compound, the furnace temperature is increased to X°C that falls within the range of 800°C to 1100°C. X°C is maintained for a predetermined time. After the predetermined time has elapsed, the furnace temperature is decreased to room temperature. The total of the durations at the respective temperatures ranges from five hours to 15 hours. The duration at each temperature is the same. As a result, the positive electrode active material is synthesized.

After firing, the positive electrode active material is crushed in an agate mortar until the particle size is less than or equal to 0.2 mm. The positive electrode active material is dispersed in 500 mL of pure water to form a slurry. The slurry is vigorously stirred for a minute. The slurry is filtered by filter paper and a Buchner funnel. The residue is rinsed with 500 mL of pure water to form a cake. The cake is dried at 90°C in a vacuum. After drying, the cake is crushed in an agate mortar and adjusted into a predetermined particle size. For example, instead of an agate mortar, a lab mill or other mills may be used.

The flux may be completely removed or partially left through washing after firing. The mass ratio of the residual flux to the positive electrode active material may be, for example, less than or equal to 0.100, less than or equal to 0.050, less than or equal to 0.040, less than or equal to 0.030, less than or equal to 0.020, less than or equal to 0.010, less than or equal to 0.005, less than or equal to 0.003, or less than or equal to 0.001. The mass ratio of the residual flux to the positive electrode active material may be, for example, greater than or equal to zero, greater than or equal to 0.001, greater than or equal to 0.003, greater than or equal to 0.005, greater than or equal to 0.010, greater than or equal to 0.020, greater than or equal to 0.030, greater than or equal to 0.040, or greater than or equal to 0.050. The residual flux may include at least one selected from the group consisting of, for example, Li₂CO₃ and LiHCO₃.

### Evaluation

A laminated cell is prepared. The laminated cell refers to a cell in which a power generation element is housed in a pouch made from an Al laminated film. The configuration of the power generation element is as described below.
Positive electrode: positive electrode active material, conductive material (acetylene black)
Negative electrode: negative electrode active material (natural graphite)
Electrolyte: LiPF₆ (1 mol/L), EC/DMC/EMC = 3/4/3 (volume ratio)

A positive electrode and a negative electrode are manufactured by applying a slurry to the surface of a base material (metal foil). For example, a film applicator (with a film thickness adjustment function) manufactured by Allgood is used as a coating apparatus. After the slurry is applied, the coating is dried at 80°C for five minutes.

In the laminated cell, a cycle test under the following conditions is performed.
Ambient temperature: 60°C
Number of cycles: 50
Current rate: 0.3 C
Voltage range: 4.25 V to 2.5 V

At a current rate of 1 C, the rated capacity of the cell is discharged in an hour. 0.3 C is 0.3 times the rate of 1 C. The capacity retention rate is determined by dividing the discharge capacity of the 50th cycle by the discharge capacity of the first cycle. As the capacity retention rate increases, the cycle characteristics are considered to be better.

### Experimental Results

In FIG. 8, when the relationship "1.10 ≤ a/b" and the relationship "60° ≤ θ ≤ 120°" are satisfied, the tendency of improvements in cycle characteristics is observed.

When the relationship "2.00 ≤ a/b ≤ 6.10" is satisfied, the tendency of improvements in cycle characteristics is observed.

When the relationship "82° ≤ θ ≤ 94°" is satisfied, the tendency of improvements in cycle characteristics is observed.

When the relationship "451 ≤ Aₜₒₜₐₗ ≤ 584" is satisfied, the tendency of improvements in cycle characteristics is observed.

When the proportion of single crystal particles that satisfy the relationship "60° ≤ θ ≤ 120°" is higher than or equal to 21%, the tendency of improvements in cycle characteristics is observed.

When the relationship "1.59 µm ≤ a ≤ 3.48 µm" and the relationship "0.377 µm ≤ b ≤ 1.45 µm" are satisfied, the tendency of improvements in cycle characteristics is observed.

## Claims

1. A positive electrode active material comprising powder including single crystal particles (1), wherein:
each of the single crystal particles (1) includes a lithium transition metal composite oxide;
the lithium transition metal composite oxide has a crystal structure that belongs to R-3m space group;
the lithium transition metal composite oxide includes at least nickel;
in a scanning electron microscope image of the powder, the single crystal particles (1) do not aggregate and are independent single particles;
each of the single crystal particles (1) has a polyhedral shape;
each of the single crystal particles (1) has a longest side (1a) and a short side (1b);
the longest side (1a) extends along a 003 plane;
the short side (1b) is connected to an end of the longest side (1a);
an interior angle formed between the longest side (1a) and the short side (1b) ranges from 60° to 120°; and
a ratio of the longest side (1a) to the short side (1b) is greater than or equal to 1.10.

2. The positive electrode active material according to claim 1, wherein the ratio of the longest side (1a) to the short side (1b) is greater than or equal to 2.00 and less than or equal to 6.10.

3. The positive electrode active material according to claim 1 or 2, wherein the interior angle ranges from 82° to 94°.

4. The positive electrode active material according to claim 1 or 2, wherein an angularity of the single crystal particles (1) ranges from 451 to 584.

5. The positive electrode active material according to claim 1 or 2, wherein in the powder, a proportion of the single crystal particles (1) with the interior angle ranging from 60° to 120° is higher than or equal to 21%.

6. The positive electrode active material according to claim 1 or 2, wherein:
the longest side (1a) ranges from 1.59 µm to 3.48 µm; and
the short side (1b) ranges from 0.377 µm to 1.45 µm.

7. The positive electrode active material according to claim 1 or 2, wherein:
each of the single crystal particles (1) has a composition represented by a general formula: LiₓNiₐCo_{b}Mn_{c}O_{y}; and
in the general formula, x, a, b, c, and y satisfy relationships 0.1 ≤ x ≤ 1.5, 0.5 ≤ a ≤ 1.0, 0 ≤ b ≤ 0.3, 0 ≤ c ≤ 0.3, a + b + c = 1.0, and 1.5 ≤ y ≤ 2.1.

8. An electrode (10) comprising a positive electrode layer (11), wherein the positive electrode layer (11) includes the positive electrode active material according to claim 1 or 2.

9. A lithium ion secondary battery (100) comprising the electrode (10) according to claim 8.

10. The lithium ion secondary battery (100) according to claim 9, wherein the lithium ion secondary battery (100) has a bipolar structure.
